Europäisches Patentamt

(19) European Patent Office

Office européen des brevets

(11) Publication number: **0 113 876**
**A2**

# (12) EUROPEAN PATENT APPLICATION

(21) Application number: **83112518.2**

(22) Date of filing: **13.12.83**

(51) Int. Cl.³: **G 05 D 16/20,** F 16 K 31/40, **F 23 N 5/02**

(30) Priority: **17.12.82 US 450833**

(43) Date of publication of application: **25.07.84**
**Bulletin 84/30**

(84) Designated Contracting States: **BE DE FR GB IT NL**

(71) Applicant: **HONEYWELL INC., Honeywell Plaza,**
**Minneapolis Minnesota 55408 (US)**

(72) Inventor: **Dietiker, Paul, 642 Via Los Miradores, Redondo**
**Beach California 90277 (US)**

(74) Representative: **Rentzsch, Heinz et al, Honeywell**
**Europe S.A. Holding KG**
**Kaiserleistrasse 55 Postfach 184, D-6050 Offenbach am**
**Main (DE)**

(54) **Gas control apparatus.**

㊼ A gas valve has an electromagnetic actuator (30) for controlling a servo valve (33, 36) supplying pressure to a main valve (15) wherein the servo valve can control the main valve in an On/Off and in a modulating manner to maintain a regulated outlet pressure.

EP 0 113 876 A2

0113876

HONEYWELL INC.                          13. Dezember 1983
Honeywell Plaza                         R1009302
Minneapolis, Minn.                      HR/de
USA

## GAS CONTROL APPARATUS

While gas valves have had on/off and regulated pressure operation, such valves have required two separate operators for the on/off operation and the pressure regulation. In a prior art modulating gas system shown in the instruction sheet published by Honeywell Inc., Form No. 95-6785, January 1969, a gas valve V7284A had a modulating output using an electromagnetic operator. A separate on/off valve would turn the gas on and the electromagnetic operator would maintain a predetermined pressure depending upon the electric signal. In another type of gas control apparatus for regulating the output shown in EP-A 62 856 and using a gas pressure regulator as described in EP-A 39000 an electromagnetic operator is used to vary the outlet pressure of a gas valve; however, the on/off operation is controlled by a separate series connected valve.

It is the object of the present invention to have a single electromagnetic actuator control a servo valve to provide the on/off operation of a main gas pressure control valve and to maintain a regulated gas pressure output. This is achieved by the features of claim 1. Specifically, the electromagnetic actuator has a member which is connected to a pressure responsive diaphragm servo valve to exhaust gas from the underside of the main diaphragm so that once the valve is open to cause the main gas valve to open, the servo valve is controlled to maintain a selected outlet gas pressure from the main valve. Further features and improvement are described in the subclaims.

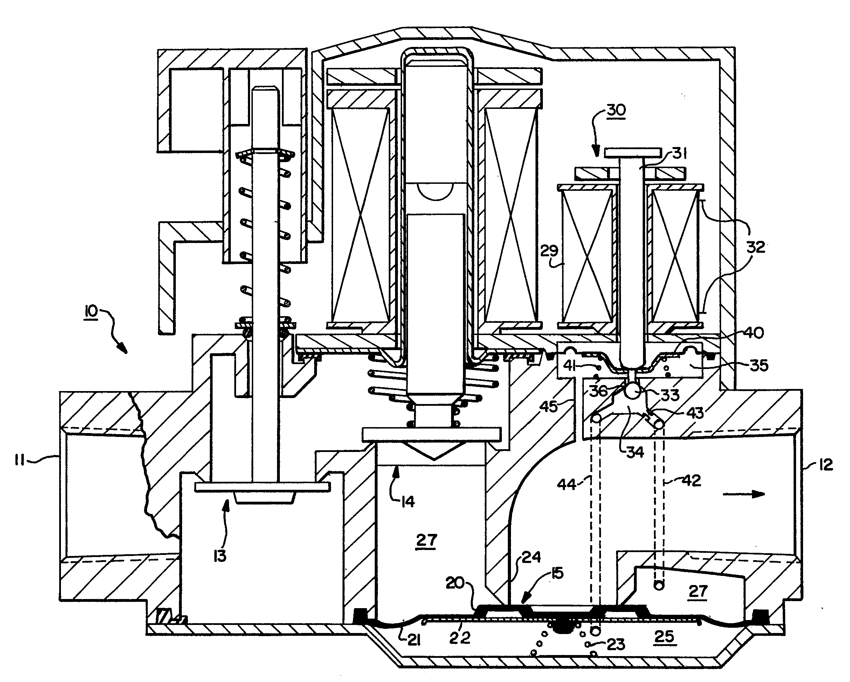

The drawing shows a preferred embodiment of the valve assembly having the electromagnetic actuator for controlling the main gas valve in an on/off and modulating operation.

A gas control apparatus 10 has an inlet 11 to be connected to a source of gas under pressure and an outlet 12 to be connected to an appliance making use of the controlled gas supply. The apparatus has a manual valve 13 and a series connected electromagnetic on/off valve 14 (safety valve) which are no part of the present invention.

The main control of the gas from inlet 11 to outlet 12 is achieved by a main valve 15 which has a valve closure member 20 attached to a main diaphragm 21. Diaphragm 21 has a backing plate 22 and is biased upward by a spring 23 against seat 24. The position of closure member 20 depends upon the balance of forces, that is, the force of spring 23 and the pressure in chamber 25 acting against the underside of diaphragm 21 and the inlet gas pressure in inlet chamber acting on the top side of diaphragm 21, whereat the forces generated by said pressures depend on the effective areas of the diaphragm exposed to the two gas pressures.

An electromagnetic actuator 30 has an armature rod 31 which is moved up and down in response to an electrical power signal supplied to input 32 of coil 29. Rod 31 is connected to a closure member 33 co-operating with a seat 36 for bleeding gas from a chamber 34 into a chamber 35 on the underside of a diaphragm 40. A spring 41 biases diaphragm 40 upward against rod 31. Chamber 34 receives inlet gas from inlet 11 (when valves 13 and 14 are open) and inlet chamber 27 through a conduit 42 which has a restriction at 43.

Chamber 34 is connected to chamber 25 by conduit 44. Chamber 35 on the underside of diaphragm 40 is connected to outlet 12 by a conduit 45.

Description of the Operation

Electromagnetic actuator 30 when de-energized has rod 31 in the position as shown under the bias of spring 41 to maintain closure member 33 against seat 36 to close the opening between chambers 34 and 35. The inlet gas pressure in chamber 34 maintains via conduit 44 a pressure in chamber 25 to hold diaphragm 21 upward to close the main valve 15 by holding closure member 20 against seat 24. The pressure in chamber 25 is assisted by spring 23. Under these conditions the force acting on the underside of diaphragm 21 is bigger than the force acting on its upper side, i.e. $P_{25}$ in chamber 25 x effective diaphragm area $A_{25}$ exposed to this pressure plus the force $F_{23}$ of spring 23 is bigger than inlet pressure $P_{27}$ in chamber 27 x the effective diaphragm area $A_{27}$ exposed to this pressure plus outlet pressure $P_{12}$ x the effective diaphragm area $A_{24}$ exposed to the outlet pressure. The gas flow from inlet 11 to outlet 12 is off.

With valves 13 and 14 open, upon energization of actuator 30, rod 31 is moved downward to open bleed valve 33, 36 and allow gas to exhaust from chamber 25 on the underside of diaphragm 21 through concuit 44 and 45 to outlet 12. The pressure $P_{25}$ in chamber 25 decreases in the direction to the value of outlet pressure $P_{12}$. As soon as $P_{25}$ x $A_{25}$ + $F_{23}$ becomes smaller than $P_{27}$ x $A_{27}$ + $P_{12}$ x $A_{24}$ diaphragm 21 starts to move downwards and main gas valve 15 opens to allow gas to flow to outlet 12 to maintain a pressure in the outlet when connected to an appliance. The outlet pressure is maintained on the underside of diaphragm 40 in bleed chamber 35 which provides a force to counteract the force of the electromagnetic actuator.

As the power or electric current to actuator 30 is increased, the force moving member 31 downward increases and valve 33 opens to decrease the pressure in chamber 25. Main valve member 20 opens to a greater extent increasing the outlet pressure which via conduit 45 is balanced against the diaphragm 40. An equilibrium is reached between the outlet pressure acting on the underside of diaphragm 40 and the force generated by solenoid 29, 31. Therewith a predetermined pressure is established in chambers 34 and 25. This pressure controls in accordance with the above formula the position of main valve closure member 20 and therewith the pressure at outlet 12. Any changes of the inlet and/or outlet pressure change the afore mentioned equilibrium and cause appropriate rebalancing as is known from servopressure regulators.

Once the pilot valve 13 is opened and the on/off valve 14 is energized, upon energization of the single actuator 30 the main gas valve 15 is opened and controlled to regulate the gas pressure output in accordance with the magnitude of the input electrical power.

Claims

1. Gas control apparatus with a servopressure regulator for regulating the control pressure for a pressure operated main valve, said pressure regulator comprising a pressure chamber (34) connected to the main valve (15), a bleed valve (33,36) provided between said pressure chamber (34) and the outlet side (12) of the main valve, and an electromagnetic actuator (30) acting upon the closure member (33) of the bleed valve (33,36), c h a r a c t e r i z e d   i n   t h a t the electro-magnetic actuator (30) is arranged for opening and controlling the bleed valve (33,36) upon energization of its solenoid (29,32) against the force of a spring (41) which with its one end abuts stationarily and with its other end biases the closure member (33) in closing direction.

2. Apparatus according to claim 1, c h a r a c t e r - i z e d   b y   a bleed chamber (35) provided between the bleed valve (33,36) and a conduit (45) leading to the outlet side (12) of the main valve (15) whereat a wall portion of the bleed chamber is formed by a diaphragm (40) which is mechanically connected to the closure member (33) of the bleed valve.

3. Apparatus according to claim 2, c h a r a c t e r - i z e d   i n   t h a t   an armature rod (31) of the electrical actuator (30) at its one end carries the closure member (33) of the bleed valve (33,36) and is mechanically connected to the diaphragm (40).

4. Apparatus according to one of claims 1 to 3, whereat the main valve includes a pressure chamber (25), a diaphragm (21) forming a wall portion of said pressure chamber, a closure member (20) connected to said diaphragm, a stationary valve seat (24) and a spring (23) biasing the closure member (20) against said seat (24), c h a r a c t e r i z e d i n t h a t the main valve closure member (20) is formed by the central portion of the diaphragm (21) supported by a diaphragm plate (22).

5. Apparatus according to claim 4, c h a r a c t e r - i z e d i n t h a t the main valve seat (24) is surrounded by a ring shaped inlet chamber (27) on the same side of the main diaphragm (21) whereas the pressure chamber (25) and the bias spring (23) are provided on the opposite side of the diaphragm.

6. Apparatus according to one of claims 1 to 5, c h a r a c t e r i z e d i n t h a t a restricted passage (43) is provided between the inlet (11,27) and the pressure chamber (34) of the pressure regulator.

7. Gas control apparatus according to one of the preceding claims comprising
   a) a gas pressure controlled main valve (15) for controlling the flow of gas from an inlet (11,27) to an outlet (12) of the apparatus, said main valve including a pressure chamber (25), a diaphragm (21) forming a wall portion of said pressure chamber, a closure member (20) mechanically connected to said diaphragm, a stationary valve seat (24) and a spring (23) biasing said closure member (20) against said valve seat (24);
   b) a solenoid operated servopressure regulator (29 to 41) providing the control pressure to the pressure chamber (25) of the main valve (15), said servopressure regulator including a diaphragm (40) exposed to the outlet pressure, a bleed valve closure member (33) connected to said diaphragm (40), a solenoid actuator (30) acting upon said diaphragm and said closure member (33), a spring biasing said closure member (33) against a valve seat (36), a control pressure chamber (34) communicating with the pressure chamber (25) of the main valve (15) and being connected via an orifice (43) to the inlet (11,27), a bleed chamber (35) provided between the bleed valve (33,36) and the diaphragm (40) and connected to the outlet (12),

c h a r a c t e r i z e d   i n   t h a t

c) the solenoid actuator (30) is arranged for opening the bleed valve (33,36) upon energization of the solenoid;

d) the closure member (33) of the bleed valve (33,36) is fixed to an armature rod (31) of the solenoid actuator (30); and

e) the bias spring (41) for the closure member (33) is stationarily abutted at its one side.